# FASCICULE DE BREVET EUROPEEN

(11) **EP 3 030 910 B1**
(45) Date de publication et mention de la délivrance du brevet: **24.10.2018**
(21) Numéro de dépôt: 14749839.8
(22) Date de dépôt: 08.08.2014
(51) Int. Cl.: G01N 35/10

(54) **PROCÉDÉ ET DISPOSITIF DE LAVAGE D'UN DISPOSITIF DE PIPETAGE-DISTRIBUTION**
VERFAHREN UND VORRICHTUNG ZUM WASCHEN EINER PIPETTIERUNGSVORRICHTUNG
METHOD AND DEVICE FOR WASHING A PIPETTING-DISPENSING DEVICE

(30) Priorité: 09.08.2013 FR 1357925
(43) Date de publication de la demande: 15.06.2016
(73) Titulaire: Novacyt, 78140 Velizy Villacoublay (FR)
(72) Inventeur: PELTIER, Eric, F-92140 Clamart (FR)
(74) Mandataire: Lavoix
(86) Numéro de dépôt international: PCT/EP2014/067122
(87) Numéro de publication internationale: WO 2015/018937

(56) Documents cités:
- WO-A1-2011/117523
- WO-A1-2011/117523
- WO-A2-2012/103214
- US-A- 5 186 194
- US-A- 5 733 507
- US-A1- 2004 181 050
- US-A1- 2005 074 363
- US-A1- 2005 235 762
- US-A1- 2009 162 853
- US-A1- 2011 293 474
- US-A1- 2012 003 731

## Description

La présente invention concerne un procédé de nettoyage d'un dispositif de pipetage-distribution, du type comprenant au moins une étape de rinçage du dispositif de pipetage-distribution au moyen d'un produit détergent, ledit produit étant injecté dans une extrémité amont de l'aiguille et évacué de ladite aguille par une extrémité aval.

L'invention concerne également un dispositif de lavage apte à mettre en oeuvre un tel procédé.

Le procédé et le dispositif de lavage selon l'invention sont par exemple destinés à permettre le lavage d'un dispositif de pipetage-distribution prévu dans un automate de préparation de plaques d'analyse à partir de prélèvements cytologiques, tels que des frottis du col de l'utérus ou autres. Un tel automate est par exemple décrit dans le document WO-2011/117523. Cet automate comprend une pluralité d'aiguilles agencées pour réaliser une pluralité d'opérations, telles que la mise en suspension d'un prélèvement, la récupération d'échantillons de la suspension cellulaire, le dépôt de ces échantillons dans des contenants d'analyse, avec éventuellement des étapes intermédiaires de mélange des échantillons dans les aiguilles, de remise en suspension de ces échantillons et/ou de mélange des échantillons avec un produit de marquage ou autre, tel que cela est décrit dans le document WO-2011/117523. Ces opérations sont réalisées à une haute cadence à partir d'une multitude de prélèvements afin de préparer des lames d'analyse ou autre contenants d'analyse prêts pour une analyse ultérieure par un praticien.

On comprend que dans un tel automate, il est primordial d'éviter toute contamination des prélèvements et des échantillons, aussi bien une contamination externe qu'une contamination des échantillons entre eux. En effet, une telle contamination rendrait les contenants d'analyse réalisés totalement inexploitables ou pourrait mener à des diagnostics erronés.

Pour ce faire, il a été proposé de remplacer les aiguilles entre le traitement des prélèvements successifs de sorte que chaque aiguille est à usage unique et ne traite que des opérations relatives à seul prélèvement, ce qui permet d'éviter tout risque de contamination des prélèvements entre eux. Les aiguilles sont alors réalisées sous forme de consommables jetables après une utilisation. De tels consommables augmentent considérablement les coûts d'exploitation d'un automate et génèrent des problèmes de gestion de déchets, notamment de déchets contaminés et potentiellement dangereux pour l'environnement. En outre, il est nécessaire de prévoir des moyens de remplacement des aiguilles entre chaque cycle de traitement de prélèvements, ce qui complexifie l'automate et réduit les cadences de traitement. De plus, de tels systèmes peuvent générer l'aérosolisation de microparticules car ils ont recourt à des moyens de mélange utilisant de l'air.

Selon une autre solution, on prévoit de nettoyer les aiguilles entre le traitement des prélèvements successifs au moyen d'un produit détergent. L'automate comprend alors un dispositif de rinçage permettant d'injecter entre chaque cycle de traitement un produit détergent dans chaque aiguille. Cette injection se fait par l'amont de l'aiguille, c'est-à-dire par l'extrémité de l'aiguille opposée à l'extrémité par laquelle se font les différents prélèvements, par l'intermédiaire d'une pompe reliée à un réservoir de produit détergent. La pompe aspire le produit détergent du réservoir et l'injecte par l'extrémité amont de l'aiguille qui évacue le produit par son extrémité aval. Le produit peut éventuellement être évacué dans une chambre de rinçage dans laquelle est disposée l'aiguille. Ainsi, le produit évacué remplit la chambre et nettoie la surface extérieure de l'aiguille.

Un tel dispositif de lavage connu permet de nettoyer superficiellement les aiguilles, mais n'est pas suffisant sur le long terme. En effet, au fur et à mesure de l'utilisation de l'automate, du mucus ou autres substances apparentées issus des prélèvements cellulaires se déposent sur les aiguilles, alors que le produit détergent n'est pas apte à évacuer ce mucus ou ces substances. Ainsi, le mucus peut entraîner des obturations des aguilles ou une pollution du reste de l'automate. En outre, le mucus augmente l'adhésion des cellules sur les aiguilles, ce qui réduit l'efficacité du produit détergent et peut entraîner à terme des contaminations croisées entre les prélèvements. Enfin, le produit détergent n'est pas apte à détruire d'éventuels virus qui pourraient être prélevés par le dispositif de pipetage-distribution, ce qui augmente les risques de contamination des prélèvements, notamment dans la réalisation de techniques de biologie moléculaire (par exemple HPV reflex testing).

Document WO2012/103214 décrit un exemple d'utilisation d'un produit mucolytique mais dans le cadre d'un procédé de nettoyage de billes magnétiques. Le document WO2011117523 ne décrit pas de procède de lavage d'un dispositif de pipetage mais suggère uniquement qu'un produit mucolytique peut être ajouté aux prélèvements renfermant du mucus. Le document US2005/0074363 se réfère au lavage d'un dispositif de pipetage ou un produit détergent et un produit désinfectant sont utilisés, mais sans décrire l'utilisation d'un produit mucolytique.

L'un des buts de l'invention est de pallier ces inconvénients en proposant un procédé de lavage d'un dispositif de pipetage-distribution plus efficace et garantissant l'élimination ou l'évacuation des éléments polluants ou contaminants du dispositif de pipetage-distribution.

A cet effet, l'invention concerne un procédé du type précité, dans lequel ledit procédé comprend en outre les étapes suivantes :
- prélèvement par l'extrémité aval de l'aiguille d'un produit mucolytique,
- évacuation dudit produit mucolytique par ladite extrémité aval,
- prélèvement par l'extrémité aval de l'aiguille d'un produit désinfectant, et
- évacuation dudit produit désinfectant par ladite extrémité aval.

Le prélèvement d'un produit mucolytique lors d'un cycle de nettoyage permet d'évacuer le mucus déposé sur les aiguilles et ainsi d'éliminer les risques d'obturation ou d'adhésion des cellules. Le prélèvement d'un produit désinfectant évite la création d'un biofilm et permet de détruire les microorganismes, tels que des virus, des bactéries ou des champignons, éventuellement prélevés lors du traitement des prélèvements cellulaires. Le fait d'effectuer des étapes de prélèvement par l'extrémité aval des aiguilles, par aspiration alors qu'un lavage classique se fait par dispense, permet en outre de créer des turbulences dans le dispositif de pipetage-distribution et améliore ainsi la circulation des produits de lavage. En outre, cela évite au produit mucolytique et au produit détergent de passer par les moyens d'aspiration et de dispense disposés en amont de l'aiguille et ainsi d'endommager ces moyens, généralement formés par une pompe volumétrique ou pompe péristaltique. De plus, certaines étapes peuvent être réalisées sans que l'aiguille ne quitte le flacon contenant la suspension cellulaire, ce qui permet de se prévenir des risques de contamination croisée entre les différentes suspensions cellulaires à analyser.

Selon d'autres caractéristiques du procédé selon l'invention :
- l'étape de rinçage au moyen d'un détergent comprend une étape d'évacuation du détergent dans une chambre de lavage, l'aiguille étant plongée dans le détergent évacué dans ladite chambre de lavage ;
- l'étape de prélèvement d'un produit mucolytique est suivie d'une étape de prélèvement d'un volume d'une suspension cellulaire, de sorte que le produit mucolytique pénètre dans l'aiguille avant la suspension cellulaire et quitte l'aiguille après la suspension cellulaire ;
- au moins une partie du volume de produit mucolytique prélevé est mélangé avec le volume de suspension cellulaire prélevé, l'évacuation de ladite partie du volume de produit mucolytique étant réalisée simultanément avec l'évacuation du volume de suspension cellulaire ;
- l'étape d'évacuation du volume de suspension cellulaire et du produit mucolytique est réalisée contre la paroi d'un flacon contenant la suspension cellulaire de sorte à rompre le mucus et les amas cellulaires présents dans le volume de suspension cellulaire ;
- l'injection, l'évacuation et le prélèvement de produits dans l'aiguille sont réalisés par des moyens d'aspiration et de dispense en communication fluidique avec l'extrémité amont de l'aiguille par l'intermédiaire une tubulure ;
- les étapes de prélèvements sont agencées pour que le produit prélevé traverse l'aiguille de l'extrémité aval à l'extrémité amont et pénètre dans la tubulure reliant l'extrémité amont de l'aiguille aux moyens d'aspiration et de dispense, les étapes d'évacuation étant réalisées avant que le produit prélevé atteigne lesdits moyens d'aspiration et de dispense ;
- le procédé de lavage comprend une étape de détermination de la présence et de la quantité de liquide dans la tubulure réalisée au moyen d'un capteur de niveau prévu au niveau de la tubulure ; et
- le produit mucolytique est une solution à base de dithiothréitol et en ce que le produit désinfectant est une solution à base d'eau de javel.

L'invention concerne également un dispositif de lavage d'un dispositif de pipetage-distribution destiné à mettre en oeuvre un procédé de lavage tel que décrit ci-dessus, ledit dispositif comprenant au moins une aiguille tubulaire de pipetage-distribution, destiné à mettre en oeuvre un procédé de lavage tel que défini ci-dessus, ledit dispositif comprenant des moyens d'aspiration et de dispense prévus en amont de l'aiguille et en communication fluidique avec une extrémité amont de l'aiguille, une source de produit détergent en amont des moyens d'aspiration et de dispense et en communication fluidique avec lesdits moyens de sorte que lesdits moyens sont aptes à aspirer le produit détergent et à l'injecter dans l'aiguille par son extrémité amont, et ledit dispositif comprend en outre au moins une source de produit mucolytique et au moins une source de produit désinfectant, les moyens d'aspiration et de dispense étant aptes à aspirer le produit mucolytique et le produit désinfectant par l'intermédiaire de l'extrémité aval de l'aiguille.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'automate de prélèvement et d'analyse dont le dispositif de pipetage-distribution peut être lavé selon le procédé selon l'invention,
- la Fig. 2 est une représentation schématique en coupe d'un dispositif de lavage selon l'invention,
- la Fig. 3 est un diagramme montrant les différentes étapes du procédé de lavage selon l'invention, et
- la Fig. 4 est une représentation schématique d'un flacon au cours d'une étape de mélange du procédé de lavage selon l'invention.

Dans la description, les termes « amont » et « aval » sont définis par rapport à la direction de circulation d'un liquide détergent dans l'aiguille, le liquide étant refoulé dans l'aiguille par des moyens de dispense disposés en amont de l'aiguille. Par conséquent, la dispense de l'aiguille se fait selon une direction amont-aval, tandis que l'aspiration se fait selon une direction aval-amont.

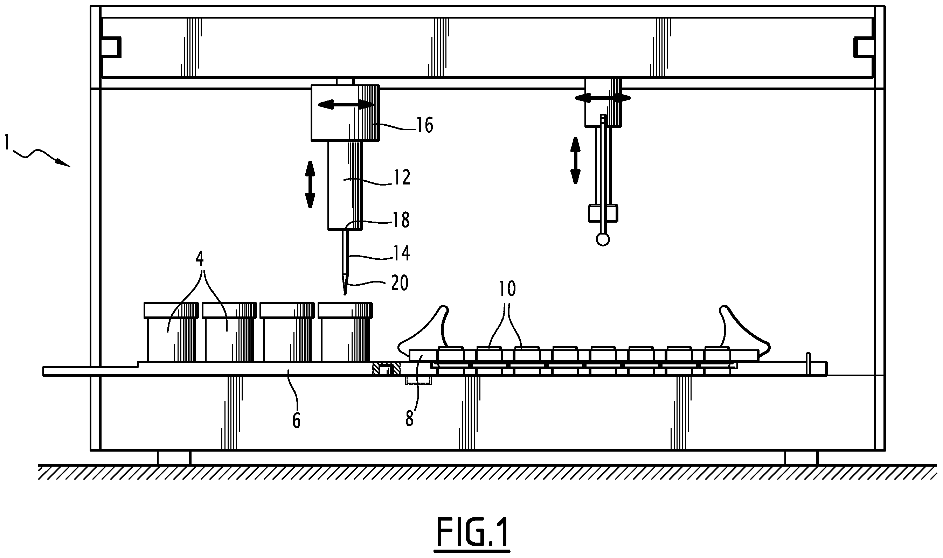

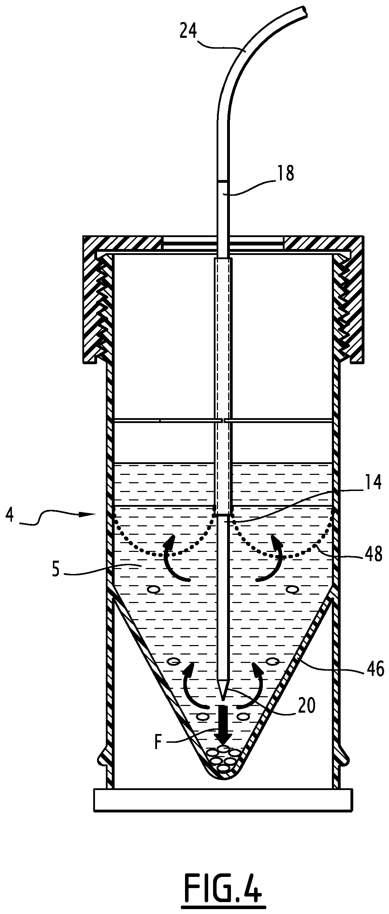

Sur la Fig. 1, on a représenté un automate 1 de préparation et d'analyse d'au moins un flacon 4 contenant une suspension cellulaire 5 à analyser (Fig. 4), telle que par exemple une suspension cytologique fixée. Les suspensions cellulaires 5 sont obtenues par une mise en suspension de prélèvements cellulaires obtenus par exemple au cours d'une opération de dépistage par frottis du col de l'utérus ou par d'autres types de prélèvements. La façon dont le prélèvement est mis en suspension et dont les cellules sont préservées est connue et ne sera pas décrite en détail ici.

L'automate 1 comprend pour l'essentiel un plateau de réception 6 des flacons 4 et de chambres de décantation 10 disposées au-dessus de lames d'analyse sur lesquelles des étalements cellulaires en deux dimensions doivent être réalisés à partir des suspensions cellulaires 5, par l'intermédiaire d'un dispositif de pipetage-distribution 12, apte à prélever des échantillons des suspensions cellulaires 5 et à déposer ces échantillons dans les chambres de décantation 10, en passant éventuellement par des étapes de traitement intermédiaires.

Dans la mesure où l'automate 1 et son fonctionnement ont été décrits dans le document WO-2011/117523, l'automate ne sera pas décrit plus en détail ici. L'homme du métier peut se référer à ce document pour en connaître toutes les autres caractéristiques, détails et variantes de réalisation. Il est bien entendu que l'automate peut être adapté pour réaliser d'autres types de contenants d'analyse que des lames d'analyse. Par exemple, les contenants d'analyse 22 de ce système 20 de préparation et d'analyse peuvent comporter, selon le mode d'analyse choisi par le praticien, des lames d'étalement, des tubes de prélèvement ou d'aliquotage et des puits d'analyse ou de décantation.

Le dispositif de pipetage-distribution 12, ou encore dispositif de prélèvement, s'étend au-dessus du plateau de réception 6 et est apte à prélever, déplacer et à verser ou évacuer diverses produits liquides, notamment des échantillons des suspensions cellulaires 5. Pour ce faire, le dispositif de pipetage-distribution 12 comprend une pluralité d'aiguilles 14, ou pipettes, tubulaires et creuses, déplaçables entre les différents postes de l'automate 1 par un bras 16 et mobile verticalement pour permettre d'abaisser et de relever les aiguilles 14.

Chaque aiguille 14 s'étend entre une extrémité amont 18 et une extrémité aval 20 en communication fluidique l'une avec l'autre.

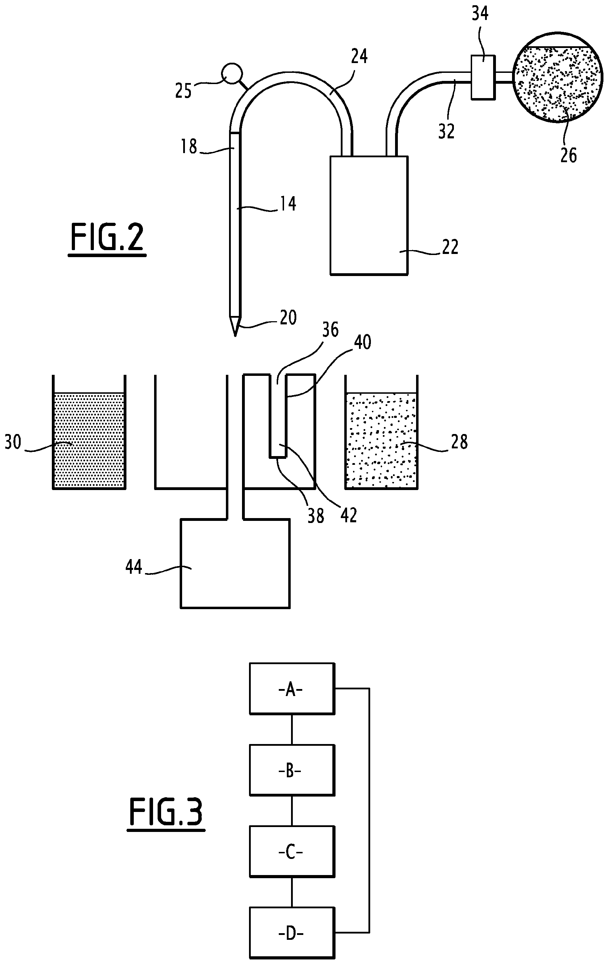

Les opérations de prélèvement d'échantillons d'une suspension cellulaire 5 se font par aspiration par l'extrémité aval 20 de l'aiguille 14 et les opérations de versement ou d'évacuation se font par dispense par cette extrémité aval 20. Pour ce faire, l'extrémité amont 18 de l'aiguille est en communication fluidique avec des moyens d'aspiration et de dispense 22 disposés en amont de l'aiguille 14 et agencés pour permettre une aspiration de produits et le dispense de ces produits par l'extrémité aval 20 de l'aiguille. Pour ce faire, les moyens d'aspiration et de dispense 22 sont reliés à l'extrémité amont 18 de l'aiguille 14 par une tubulure 24, par exemple une tubulure souple permettant le déplacement de l'aiguille 14 par rapport aux moyens d'aspiration et de dispense 22, comme représenté sur la Fig. 2.

Les moyens d'aspiration et de dispense 22 sont par exemple formés par une pompe d'aspiration-dispense classique pour ce genre d'application, telle qu'une pompe péristaltique. Alternativement, les moyens d'aspiration et de dispense 22 pourraient être formés par un système de piston et/ou de valves, ou autre. Les moyens d'aspiration et de dispense 22 permettent de mettre en oeuvre les étapes impliquant le dispositif de pipetage-distribution 12 dans le fonctionnement de l'automate 1. Un capteur de niveau 25 est prévu au niveau de la tubulure 24 entre l'extrémité amont 18 de l'aiguille 14 et les moyens d'aspiration et de dispense 22 afin de s'assurer qu'il existe suffisamment de produits de nettoyage pour la complète réalisation du procédé de lavage.

Les moyens d'aspiration et de dispense 22 et la tubulure 24 et le capteur de niveau 25 font également partis d'un dispositif de lavage, représenté sur la Fig. 2, permettant de mettre en oeuvre un procédé de lavage de chaque aiguille 14, comme cela va à présent être décrit.

Le procédé utilise au moins trois produits de nettoyage et le dispositif de lavage comprend par conséquent une source pour chacun de ces produits, à savoir une source de produit détergent 26, une source de produit mucolytique 28 et une source de produit désinfectant 30.

Le produit détergent est par exemple du Decon©. La source de produit détergent 26 est disposée en amont des moyens d'aspiration et de dispense 22 et est en communication avec ces moyens, par exemple par l'intermédiaire d'une tubulure souple 32. Un filtre 34 est prévu entre la source de produit détergent 26 et les moyens d'aspiration et de dispense 22 afin de filtrer le produit de nettoyage avant de l'injecter dans le reste du dispositif de lavage. Ainsi, les moyens d'aspiration et de dispense 22 sont aptes à aspirer le produit détergent par la tubulure souple 32 et à l'injecter dans l'aiguille 14 par la tubulure souple 24 et par l'extrémité amont 18 de l'aiguille 14. Sous l'action des moyens d'aspiration et de dispense 22, le produit détergent peut ensuite traverser l'aiguille 14 de son extrémité amont 18 à son extrémité aval 20 et évacuer le produit par son extrémité aval 20 de sorte à assurer un nettoyage complet de l'intérieur de l'aiguille 14.

Le produit mucolytique est par exemple formé par une solution à base de dithiothréitol (DTT) ou de N-acétylcystéine.. La source de produit mucolytique 28 est disposée en aval de l'aiguille 14 et n'est pas en communication fluidique permanente avec l'aiguille 14 ou avec les moyens d'aspiration et de dispense 22. Le dispositif de pipetage distribution 12 est apte à amener l'aiguille 14 vers la source de produit mucolytique 28 et à mettre l'extrémité aval 20 de l'aiguille 14 en communication fluidique avec cette source 28 en plongeant l'aiguille 14 dans la source de sorte à permettre l'aspiration du produit mucolytique par l'extrémité aval 20 de l'aiguille 14 grâce aux moyens d'aspiration et de dispense 22. Sous l'action des moyens d'aspiration et de dispense 22, le produit mucolytique peut ensuite traverser l'aiguille 14 de son extrémité aval 20 à son extrémité amont 18 et passer dans la tubulure 24 en aval des moyens d'aspiration et de dispense 22. Le capteur de niveau 25 permet de s'assurer que la quantité suffisante de produit mucolytique est prélevée grâce aux moyens d'aspiration et de dispense 22. En vue d'empêcher la pénétration du produit mucolytique dans les moyens d'aspiration et de dispense 22, la source de produit mucolytique est disposée en aval de l'aiguille 14 et non en amont des moyens d'aspiration et de dispense 22, tel que cela est prévu pour le produit détergent.

Le produit désinfectant est par exemple formé par une solution à base d'eau de javel, par exemple de l'eau de javel diluée, par exemple à 2%, ou une solution contenant de l'eau de javel et/ou d'autres agents désinfectants. La source de produit désinfectant 30 est disposée en aval de l'aiguille 14 et n'est pas en communication fluidique permanente avec l'aiguille 14 ou avec les moyens d'aspiration et de dispense 22. Le dispositif de pipetage distribution 12 est apte à amener l'aiguille 14 vers la source de produit désinfectant 30 et à mettre l'extrémité aval 20 de l'aiguille 14 en communication fluidique avec cette source 30 en plongeant l'aiguille 14 dans la source de sorte à permettre l'aspiration du produit désinfectant par l'extrémité aval 20 de l'aiguille 14 grâce aux moyens d'aspiration et de dispense 22. Sous l'action des moyens d'aspiration et de dispense 22, le produit désinfectant peut ensuite traverser l'aiguille 14 de son extrémité aval 20 à son extrémité amont 18 et passer dans la tubulure 24 en aval des moyens d'aspiration et de dispense 22. Le capteur de niveau 25 permet de s'assurer que la quantité suffisante de produit désinfectant est prélevée grâce aux moyens d'aspiration et de dispense 22. Le volume de produit désinfectant est calculé afin d'éviter que le produit ne pénètre dans les moyens d'aspiration et de dispense 22 et n'endommage ceux-ci. C'est également en vue d'empêcher la pénétration du produit désinfectant dans les moyens d'aspiration et de dispense 22 que la source de produit désinfectant est disposée en aval de l'aiguille 14 et non en amont des moyens d'aspiration et de dispense 22, tel que cela est prévu pour le produit détergent. En effet, le produit désinfectant est susceptible d'endommager ou d'enrayer les moyens d'aspiration et de dispense 22.

Le dispositif de lavage comprend en outre une chambre de nettoyage 36 comprenant un fond 38 et une paroi latérale 40 définissant entre eux un volume interne 42, fermé par le fond 38 d'une part et ouvert à l'extrémité de la paroi latérale 40 opposée au fond 38 d'autre part. Le dispositif de pipetage distribution 12 est apte à placer l'aiguille 14 dans le volume interne 42. Le produit de nettoyage présent dans l'aiguille 14 peut alors être évacué par son extrémité aval 20 dans la chambre de nettoyage 36 de sorte qu'il remplit le volume interne et enrobe la surface externe de l'aiguille 14 dans le volume interne 42. Ainsi, la chambre de nettoyage 36 permet un nettoyage de la surface externe de l'aiguille 14 avec le produit de nettoyage présent dans l'aiguille.

Le dispositif de lavage comprend en outre une chambre d'évacuation 44 dans laquelle les produits de nettoyage présents dans l'aiguille 14 peuvent être évacués en passant par l'extrémité aval 20 de l'aiguille 14.

En référence aux Fig. 2 à 4, on va à présent décrire le fonctionnement du dispositif de lavage. Plusieurs modes de lavage peuvent être prévus, chacun des modes impliquant plus ou moins de cycles de lavage décrits ci-dessous selon que le lavage est réalisé avec l'automate « à vide », c'est-à-dire sans prélèvements à traiter, ou au cours du fonctionnement de l'automate entre des étapes de traitement des prélèvements et selon que le lavage doit être plus ou moins complet.

Après le traitement d'un échantillon prélevé d'une suspension cellulaire 5 par l'extrémité aval 20 d'une aiguille 14, c'est-à-dire après que l'aiguille 14 a déposé l'échantillon dans une chambre de décantation 10 en vu de la réalisation d'une lame d'analyse, l'aiguille 14 doit être nettoyée. Des étapes de nettoyage de l'aiguille 14 peuvent également avoir lieu lors du prélèvement et de la dispense de l'échantillon dans le cône de décantation du flacon en vue d'éviter la présence de cellules et de mucus dans l'aiguille 14.

Au cours d'une première étape de lavage A (Fig. 3), les moyens d'aspiration et de dispense 22 sont actionnés de sorte à aspirer le produit détergent de la source de détergent 26 et à injecter ce produit dans l'aiguille 14 par l'extrémité amont 18 de cette aiguille 14. Cette étape est réalisée alors que l'aiguille 14 se trouve dans la chambre de lavage 36 ou alors que l'aiguille est en train d'être déplacée vers cette chambre de lavage 36. Lorsque l'aiguille 14 est placée dans la chambre de lavage 36, le produit détergent est évacué de l'aiguille 14 par son extrémité aval 20 et nettoie l'extérieur de l'aiguille 14 comme décrit précédemment. Lors de cette étape de lavage, le produit détergent est passé par le filtre 34 par lequel il a été filtré, puis par la tubulure souple 32, les moyens d'aspiration et de dispense 22, puis par la tubulure souple 24 et l'intérieur de l'aiguille 14 qu'il a nettoyés avant de nettoyer l'extérieur de l'aiguille 14 grâce à la chambre de lavage 36. Ainsi, un nettoyage complet du dispositif de pipetage distribution a eu lieu par le produit détergent qui peut ensuite être évacué par la chambre d'évacuation 44.

Au cours d'une seconde étape de lavage B, l'aiguille 14 est déplacée dans la source de produit mucolytique 28 et un volume de produit mucolytique est prélevé par l'extrémité aval 20 de l'aiguille 14 grâce aux moyens d'aspiration et de dispense 22. Au cours de cette étape, le produit mucolytique peut être aspiré jusqu'à ce qu'il atteigne un niveau prédéfini dans la tubulure souple 24 en amont de l'aiguille 14 afin d'effectuer un nettoyage complet de l'intérieur de l'aiguille 14 et d'une partie de la tubulure 24 par le produit mucolytique sans que celui-ci n'atteigne les moyens d'aspiration et de dispense 22. Le produit mucolytique peut ensuite être évacué par l'extrémité aval 20 de l'aiguille 14, par exemple dans la chambre d'évacuation 44. Il convient de noter qu'au cours de cette étape de nettoyage, des aspirations et dispenses successives peuvent être prévues afin d'assurer une bonne circulation du produit et un bon balayage des parois internes de l'aiguille 14 et de la tubulure souple 24 par le produit, par exemple en créant des turbulences à l'intérieur de l'aiguille 14 et/ou de la tubulure 24. Cette étape permet d'évacuer le mucus qui pourrait s'accumuler sur l'aiguille 14 et l'obturer ou favoriser l'adhésion des cellules sur l'aiguille.

On notera également qu'un volume de produit mucolytique peut être prélevé dans l'aiguille 14 avant chaque prélèvement d'un échantillon afin d'être utilisé pour le traitement d'un échantillon prélevé d'une suspension cellulaire 5, au cours d'une étape C. En effet, le produit mucolytique peut être avantageusement utilisé pour briser les amas cellulaires dans la suspension cellulaire 5 en détruisant le mucus qui lie les cellules entre elles. A cet effet, le produit mucolytique peut être mélangé avec l'échantillon prélevé dans la suspension cellulaire 5 et réinjecté dans le flacon 4 avec l'échantillon contre une paroi du flacon 4 afin de briser les amas cellulaires, tel que cela est représenté par la flèche F de la Fig. 4 et tel que cela est décrit dans le document WO-2011/117523. Plus particulièrement, l'échantillon et le produit mucolytique peuvent être éjectés de l'aiguille 14 contre la paroi d'un cône de décantation 46 s'étendant au fond du flacon 14. Une telle étape permet de casser/rompre les amas cellulaires du prélèvement à analyser. Une telle étape est réalisée alors que l'aiguille 14 est dans le flacon 4 et n'en sort pas au cours de cette étape, ce qui évite tout risque de contamination croisée entre les contenus des différents flacons 4.

En outre, le prélèvement de produit mucolytique avant chaque prélèvement d'un échantillon permet d'effectuer un premier nettoyage de l'aiguille 14 de l'aval vers l'amont avant que l'échantillon ne pénètre dans l'aiguille 14. Lors du dépôt de l'échantillon dans le cône de décantation du flacon, un deuxième nettoyage de l'aiguille 14 est effectué de l'amont vers l'aval lorsque le produit mucolytique est évacué de l'aiguille 14. Comme le produit mucolytique pénètre en premier dans l'aiguille 14 et est évacué de celle-ci en dernier, on s'assure que l'aiguille 14 ne conservera pas de cellules ou de mucus avant et après chaque prélèvement, ce qui supprime les risques de contamination croisée entre les échantillons. Cette étape peut être combinée avec l'étape de mélange avec l'échantillon décrite précédemment, par exemple en prélevant un premier volume de produit mucolytique, chargé d'assurer le nettoyage avant et après le prélèvement, et en prélevant un deuxième volume de produit mucolytique qui pénètre dans l'aiguille 14 après le premier volume et qui est chargé de se mélanger avec l'échantillon prélevé.

Au cours d'une étape D, intervenant entre des cycles de traitement d'échantillons par le dispositif de pipetage-distribution, l'aiguille 14 est déplacée dans la source de produit désinfectant 30 et un volume de produit désinfectant est prélevé par l'extrémité aval 20 de l'aiguille 14 grâce aux moyens d'aspiration et de dispense 22. Au cours de cette étape, le produit désinfectant peut être aspiré jusqu'à ce qu'il atteigne un niveau prédéfini dans la tubulure souple 24 en amont de l'aiguille 14 afin d'effectuer un nettoyage complet de l'intérieur de l'aiguille 14 et d'une partie de la tubulure 24 par le produit désinfectant sans que celui-ci n'atteigne les moyens d'aspiration et de dispense 22.. Le produit désinfectant peut ensuite être évacué par l'extrémité aval 20 de l'aiguille 14, par exemple dans la chambre d'évacuation 44. Il convient de noter qu'au cours de cette étape de nettoyage, des aspirations et dispenses successives peuvent être prévues afin d'assurer une bonne circulation du produit et un bon balayage des parois internes de l'aiguille 14 et de la tubulure souple 24 par le produit, par exemple en créant des turbulences à l'intérieur de l'aiguille 14 et/ou de la tubulure 24.

Les étapes de dispense des produits mucolytique et désinfectant peuvent également avoir lieu dans la chambre de lavage 36 afin d'appliquer ces produits sur la surface externe de l'aiguille 14.

Le dispositif et le procédé de lavage décrits ci-dessus permettent d'obtenir un lavage complet et efficace du dispositif de pipetage distribution 12 en évitant d'avoir recours à des consommables jetables après une utilisation. L'agencement du dispositif de lavage permet de nettoyer le dispositif de pipetage distribution avec plusieurs produits de nettoyage sans risquer d'endommager les moyens d'aspiration et de dispense 22. Il est bien entendu possible d'adapter le dispositif de lavage pour nettoyer plusieurs aiguilles 14 simultanément, bien que le lavage d'une seule aiguille ait été décrit ci-dessus.

En outre, dès lors que le procédé implique l'ajout d'un produit mucolytique dans la suspension cellulaire, le liquide de préservation cellulaire, ou fixateur, peut être plus facilement adapté au besoin de la cytologie ou de la biologie moléculaire du fait de la réalisation d'une nouvelle suspension cellulaire à partir de la suspension cellulaire initiale, la nouvelle suspension comprenant la suspension cellulaire initiale et le produit mucolytique ajouté lors du procédé. Ainsi, la suspension cellulaire initiale, ou primaire, permet une bonne conservation morphologique des cellules car son liquide de préservation est adapté à cette fonction en ne contenant peu ou pas de produit mucolytique, tandis que la nouvelle suspension cellulaire, ou suspension secondaire, permet de briser les amas. Ainsi, l'ajout du produit mucolytique se fait après fixation complète des cellules dans la suspension primaire, ce qui permet de préserver ces cellules malgré l'ajout ultérieur du produit mucolytique.

## Revendications

1. Procédé de lavage d'un dispositif de pipetage-distribution (12), comprenant au moins une aiguille (14) tubulaire de pipetage-distribution, ledit procédé comprenant au moins une étape de rinçage du dispositif de pipetage-distribution (12) au moyen d'un produit détergent, ledit produit étant injecté dans une extrémité amont (18) de l'aiguille (14) et évacué de ladite aguille (14) par une extrémité aval (20), ledit procédé étant **caractérisé en ce qu'**il comprend en outre les étapes suivantes :
- prélèvement par l'extrémité aval (20) de l'aiguille (14) d'un produit mucolytique,
- évacuation dudit produit mucolytique par ladite extrémité aval (20),
- prélèvement par l'extrémité aval (20) de l'aiguille (14) d'un produit désinfectant, et
- évacuation dudit produit désinfectant par ladite extrémité aval (20).

2. Procédé de lavage selon la revendication 1, **caractérisé en ce que** l'étape de rinçage au moyen d'un détergent comprend une étape d'évacuation du détergent dans une chambre de lavage (36), l'aiguille étant plongée dans le détergent évacué dans ladite chambre de lavage (36).

3. Procédé de lavage selon la revendication 1 ou 2, **caractérisé en ce que** l'étape de prélèvement d'un produit mucolytique est suivie d'une étape de prélèvement d'un volume d'une suspension cellulaire, de sorte que le produit mucolytique pénètre dans l'aiguille (14) avant la suspension cellulaire et quitte l'aiguille (14) après la suspension cellulaire.

4. Procédé de lavage selon la revendication 3, **caractérisé en ce que** au moins une partie du volume de produit mucolytique prélevé est mélangé avec le volume de suspension cellulaire prélevé, l'évacuation de ladite partie du volume de produit mucolytique étant réalisée simultanément avec l'évacuation du volume de suspension cellulaire.

5. Procédé de lavage selon la revendication 4, **caractérisé en ce que** l'étape d'évacuation du volume de suspension cellulaire et du produit mucolytique est réalisée contre la paroi d'un flacon (4) contenant la suspension cellulaire de sorte à rompre le mucus et les amas cellulaires présents dans le volume de suspension cellulaire.

6. Procédé de lavage selon l'une quelconque des revendications 1 à 5, **caractérisé en ce que** l'injection, l'évacuation et le prélèvement de produits dans l'aiguille (14) sont réalisés par des moyens d'aspiration et de dispense (22) en communication fluidique avec l'extrémité amont (18) de l'aiguille (14) par l'intermédiaire une tubulure (24).

7. Procédé de lavage selon la revendication 6, **caractérisé en ce que** les étapes de prélèvements sont agencées pour que le produit prélevé traverse l'aiguille (14) de l'extrémité aval (20) à l'extrémité amont (18) et pénètre dans la tubulure (24) reliant l'extrémité amont (18) de l'aiguille (14) aux moyens d'aspiration et de dispense (22), les étapes d'évacuation étant réalisées avant que le produit prélevé atteigne lesdits moyens d'aspiration et de dispense (22).

8. Procédé de lavage selon l'une quelconque des revendications 1 à 7, **caractérisé en ce qu'**il comprend une étape de détermination de la présence et de la quantité de liquide dans la tubulure (24) réalisée au moyen d'un capteur de niveau (25) prévu au niveau de la tubulure (24).

9. Procédé de lavage selon l'une quelconque des revendications 1 à 8, **caractérisé en ce que** le produit mucolytique est une solution à base de dithiothréitol et **en ce que** le produit désinfectant est une solution à base d'eau de javel.

10. Dispositif de lavage d'un dispositif de pipetage-distribution (12), comprenant au moins une aiguille (14) tubulaire de pipetage-distribution, destiné à mettre en oeuvre un procédé de lavage selon l'une quelconque des revendications 1 à 9, ledit dispositif comprenant des moyens d'aspiration et de dispense (22) prévus en amont de l'aiguille (14) et en communication fluidique avec une extrémité amont (18) de l'aiguille (14), une source de produit détergent (26) en amont des moyens d'aspiration et de dispense (22) et en communication fluidique avec lesdits moyens de sorte que lesdits moyens sont aptes à aspirer le produit détergent et à l'injecter dans l'aiguille (14) par son extrémité amont (18), ledit dispositif étant **caractérisé en ce qu'**il comprend en outre au moins une source de produit mucolytique (28) et au moins une source de produit désinfectant (30), les moyens d'aspiration et de dispense (22) étant aptes à aspirer le produit mucolytique et le produit désinfectant par l'intermédiaire de l'extrémité aval (20) de l'aiguille (14).

## Patentansprüche

1. Verfahren zum Reinigen einer Vorrichtung zur Pipettier-Ausgabe (12), welche wenigstens eine röhrenförmige Nadel (14) zur Pipettier-Ausgabe aufweist, wobei das Verfahren aufweist wenigstens einen Schritt des Spülens der Vorrichtung zur Pipettier-Ausgabe (12) mittels eines Reinigungsprodukts, wobei das besagte Produkt eingespritzt wird in ein Stromaufwärts-Ende (18) der Nadel (14) und von der Nadel (14) abgeführt wird über ein Stromabwärts-Ende (20), wobei das Verfahren **dadurch gekennzeichnet ist, dass** es ferner die folgenden Schritte aufweist:
- Entnehmen über das Stromabwärts-Ende (20) der Nadel (14) eines mucolytischen Produkts,
- Abführen des besagten mucolytischen Produkts über das Stromabwärts-Ende (20),
- Entnehmen über das Stromabwärts-Ende (20) der Nadel (14) eines desinfizierenden Produkts,
- Abführen des besagten desinfizierenden Produkts über das Stromabwärts-Ende (20).

2. Verfahren zum Reinigen gemäß Anspruch 1, **dadurch gekennzeichnet, dass** der Schritt des Spülens mittels eines Reinigers aufweist einen Schritt des Abführens des Reinigers in eine Reinigungskammer (36), wobei die Nadel in den in die Reinigungskammer (36) abgeführten Reiniger getaucht wird.

3. Verfahren zum Reinigen gemäß Anspruch 1 oder 2, **dadurch gekennzeichnet, dass** der Schritt des Entnehmens eines mucolytischen Produkts gefolgt ist von einem Schritt des Entnehmens eines Volumens einer zellularen Suspension, so dass das mucolytische Produkt vor der zellularen Suspension in die Nadel (14) eindringt und die Nadel (14) nach der zellularen Suspension verlässt.

4. Verfahren zum Reinigen gemäß Anspruch 3, **dadurch gekennzeichnet, dass** wenigstens ein Teil des Volumens des entnommenen mucolytischen Produkts gemischt wird mit dem Volumen der entnommenen zellularen Suspension, wobei das Abführen des besagten Teils des Volumens des mucolytischen Produkts simultan realisiert wird dem Abführen des Volumens der zellularen Suspension.

5. Verfahren zum Reinigen gemäß Anspruch 4, **dadurch gekennzeichnet, dass** der Schritt des Abführens des Volumens zellularer Suspension und des mucolytischen Produkts realisiert wird gegen die Wand eines Fläschchens (4), das die zellulare Suspension enthält, um den Schleim und die zellularen Klumpen, die in dem Volumen zellularer Suspension vorliegen, zu zerbrechen.

6. Verfahren zum Reinigen gemäß irgendeinem der Ansprüche 1 bis 5, **dadurch gekennzeichnet, dass** das Einspritzen, das Abführen und das Entnehmen der Produkte in der Nadel (14) realisiert werden durch Saug- uns Freigebe-Mittel (22), die in Fluidkommunikation mit dem Stromaufwärts-Ende (18) der Nadel (14) sind über eine zwischengeschaltete Rohrleitung (24).

7. Verfahren zum Reinigen gemäß Anspruch 6, **dadurch gekennzeichnet, dass** die Schritte des Entnehmens eingerichtet sind, damit das entnommene Produkt die Nadel (14) von dem Stromabwärts-Ende (20) aus zu dem Stromaufwärts-Ende (18) hin durchströmt und in die Rohrleitung (24) eindringt, die das Stromaufwärts-Ende (18) der Nadel (14) mit den Saug- und Freigebe-Mitteln (22) verbindet, wobei die Abführ-Schritte realisiert werden bevor das entnommene Produkt die Saug- und Freigebe-Mittel (22) erreicht.

8. Verfahren zum Reinigen gemäß irgendeinem der Ansprüche 1 bis 7, **dadurch gekennzeichnet, dass** es aufweist einen Schritt zur Ermittlung des Vorliegens und der Quantität von Flüssigkeit in der Rohrleitung (24), der realisiert wird mittels eine Niveau-Sensors (25), der hinsichtlich der Rohrleitung (24) angeordnet ist.

9. Verfahren zum Reinigen gemäß irgendeinem der Ansprüche 1 bis 8, **dadurch gekennzeichnet, dass** das mucolytische Produkt eine Lösung auf Basis von Dithiothreitol ist und dass das desinfizierenden Produkt eine Lösung auf Basis von Javelwasser ist.

10. Vorrichtung zum Reinigen einer Vorrichtung zur Pipettier-Ausgabe (12), aufweisend wenigstens eine röhrenförmige Nadel (14) zur Pipettier-Ausgabe, die dazu bestimmt ist, ein Verfahren zum Reinigen gemäß irgendeinem der Ansprüche 1 bis 9 durchzuführen, wobei die Vorrichtung aufweist Saug- und Freigebe-Mittel (22), die stromaufwärts der Nadel (14) vorgesehen sind und in Fluidkommunikation mit einem Stromaufwärts-Ende (18) der Nadel (14) sind, eine Reinigungsprodukt-Quelle (26) stromaufwärts der Saug- und Freigebe-Mittel (22) und in Fluidkommunikation mit den besagten Mitteln, so dass die besagten Mittel imstande sind, das Reinigungsprodukt anzusaugen und in die Nadel (14) einzuspritzen über deren Stromaufwärts-Ende (18), wobei die Vorrichtung **dadurch gekennzeichnet ist, dass** sie ferner aufweist wenigstens eine Quelle von mucolytischem Produkt (28) und wenigstens eine Quelle von desinfizierendem Produkt (30), wobei die Saug- und Freigebe-Mittel (22) imstande sind, das mucolytische Produkt und das desinfizierende Produkt anzusaugen über das zwischengeschaltete Stromabwärts-Ende (20) der Nadel (14).

## Claims

1. A method for washing a pipetting-dispensing device (12), comprising at least one tubular pipetting-dispensing needle (14), said method comprising at least one step for rinsing the pipetting-dispensing device (12) using a detergent product, said product being injected into an upstream end (18) of the needle (14) and dispensed from said needle (14) by a downstream end (20), said method being **characterized in that** it further comprises the following steps:
- pipetting a mucolytic product through the downstream end (20) of the needle (14),
- dispensing said mucolytic product through said downstream end (20),
- pipetting a disinfectant product through the downstream end (20) of the needle (14), and
- dispensing said disinfectant product through said downstream end (20).

2. The washing method according to claim 1, **characterized in that** the rinsing step using a detergent comprises a step for dispensing the detergent in a washing chamber (36), the needle being submerged in the detergent dispensed into said washing chamber (36).

3. The washing method according to claim 1 or 2, **characterized in that** the step for pipetting a mucolytic product is followed by a step for pipetting a volume of cell suspension, such that the mucolytic product penetrates the needle (14) before the cell suspension and leaves the needle (14) after the cell suspension.

4. The washing method according to claim 3, **characterized in that** at least part of the pipetted volume of mucolytic product is mixed with the volume of pipetted cell suspension, the dispensing of said part of the mucolytic product volume being done simultaneously with the dispensing of the cell suspension volume.

5. The washing method according to claim 4, **characterized in that** the step for dispensing the cell suspension volume and the mucolytic product is done against the wall of a vial (4) containing the cell suspension so as to break the mucus and cell clusters present in the cell suspension volume.

6. The washing method according to any one of claims 1 to 5, **characterized in that** the injection, dispensing and pipetting of product in the needle (14) are done by suction and dispensing means (22) in fluid communication with the upstream end (18) of the needle (14) by means of a pipe (24).

7. The washing method according to claim 6, **characterized in that** the pipetting steps are arranged so that the pipetted product passes through the needle (14) from the downstream end (20) to the upstream end (18) and penetrates the pipe (24) connecting the upstream end (18) of the needle (14) to the suction and dispensing means (22), the dispensing steps being carried out before the pipetted product reaches said suction and dispensing means (22).

8. The washing method according to any one of claims 1 to 7, **characterized in that** the washing method comprises a step for determining the presence and quantity of liquid in the pipe (24) carried out using a level sensor (25) provided at the pipe (24).

9. The washing method according to any one of claims 1 to 8, **characterized in that** the mucolytic product is a dithiothreitol-based solution and **in that** the disinfectant product is a bleach-based solution.

10. A device for washing a pipetting-dispensing device (12), comprising at least one tubular pipetting-dispensing needle (14), designed to implement a washing method according to any one of claims 1 to 9, said device comprising suction and dispensing means (22) provided upstream from the needle (14) and in fluid communication with an upstream end (18) of the needle (14), a source (26) of detergent product upstream from the suction and dispensing means (22) and in fluid communication with said means such that said means is able to suction the detergent product and inject it in the needle (14) by its upstream end (18), and said device being **characterized in that** it further comprises at least one mucolytic product source (28) and at least one disinfectant product source (30), the suction and dispensing means (22) being able to aspirate the mucolytic product and the disinfectant product via the downstream end (20) of the needle (14).
